# EUROPEAN PATENT APPLICATION

(11) **EP 1 783 045 A1**
(43) Date of publication of application: **09.05.2007**
(21) Application number: 05425777.9
(22) Date of filing: 07.11.2005
(51) Int. Cl.: B63B 19/00, E06B 3/968, F16B 11/00

(54) **Method of fabricating a door or window frame for a boat and door or window for a boat**

(71) Applicant: Opacmare S.p.A., 10040 Rivalta (TO) (IT)
(72) Inventor: Grimaldi, Michele, 10045 Piossasco (Torino) (IT)
(74) Representative: Vanzini, Christian

(57) **Abstract**

A method of fabricating a door or window frame (10; 110; 210) for a boat comprises the steps of providing a plurality of sections designed to form respective frame members (11, 12, 13, 14; 111, 112, 113, 114), and connecting these sections together by bonding them with a structural adhesive at join zones (11e, 12e, 13e, 14e; 111e, 112e, 113e, 114e) between these sections. A description is also given of a door or window for a boat comprising at least one frame (10; 110; 210) made up of a plurality of frame members (11, 12, 13, 14; 111, 112, 113, 114). These frame members consist of sections. These frame members are also connected together by bonding them with a structural adhesive at join zones (11e, 12e, 13e, 14e; 111e, 112e, 113e, 114e) between adjacent frame members.

## Description

The present invention relates to doors or windows intended to be installed in openings prepared in the walls of the rooms of a boat.

As is known, such doors or windows, particularly glazed doors, have frames made of metal sections, generally steel or aluminium. The members of these frames are generally joined together by welding. Following welding there is usually a polishing operation which is not automated. This polishing operation includes removing the weld beads from the visible surfaces of the frames, to give the door or window an aesthetically more pleasing appearance. This operation not only adds to the amount of time required to produce a door or window but also presents significant risks to the health of the people doing the polishing.

These problems are solved according to the invention by a method of fabricating a door or window frame for a boat according to Claim 1.

In this method the members which go to make up the frame are joined together by bonding them with a structural adhesive. By eliminating the welds it is possible to use prepolished sheet for the frame members. Since the polishing of individual sections can be automated, production times can be shortened.

The invention also relates to a door or window for a boat having the features defined in Claim 5.

Preferred embodiments are described in the dependent claims.

These and other objects and advantages will be made clearer in the course of the following detailed description of a preferred but not restrictive embodiment of the invention, with reference to the accompanying drawings, in which:
- Figure 1 is a front perspective view of a door or window fabricated by a method according to the present invention;
- Figure 2 is a rear perspective view of the door or window seen in Figure 1;
- Figure 3 is a perspective view of a detail, marked by arrow III, of the door or window seen in Fig. 1;
- Figure 4 is a rear perspective view of the detail seen in Figure 3;
- Figure 5 is a perspective view of a frame of one leaf of the door or window seen in Figure 1; and
- Figure 6 is a perspective view of a detail, marked by arrow VI, of the frame seen in Figure 5.

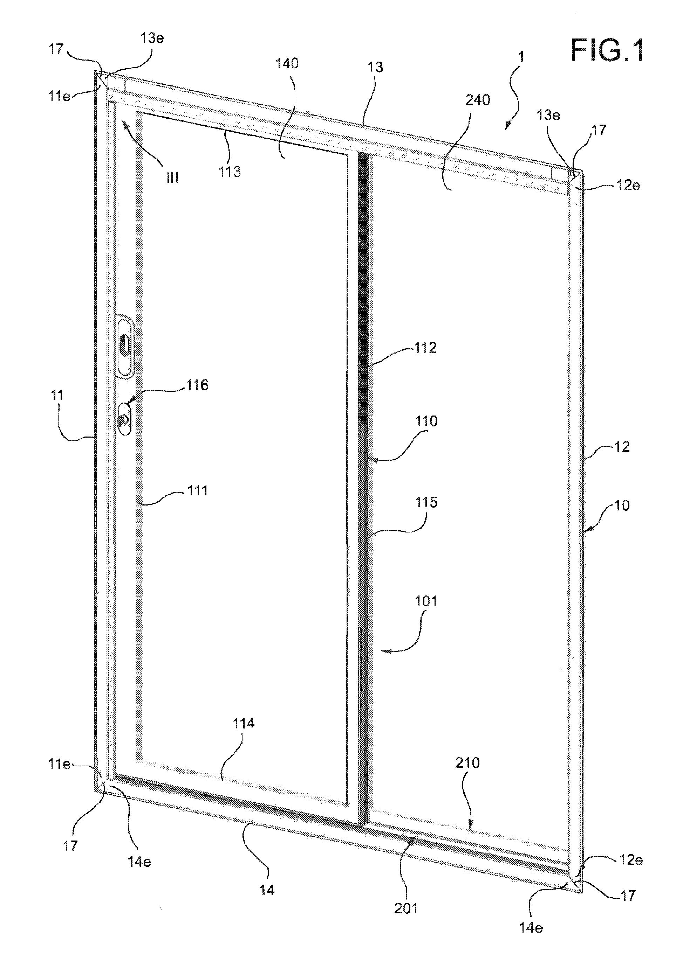

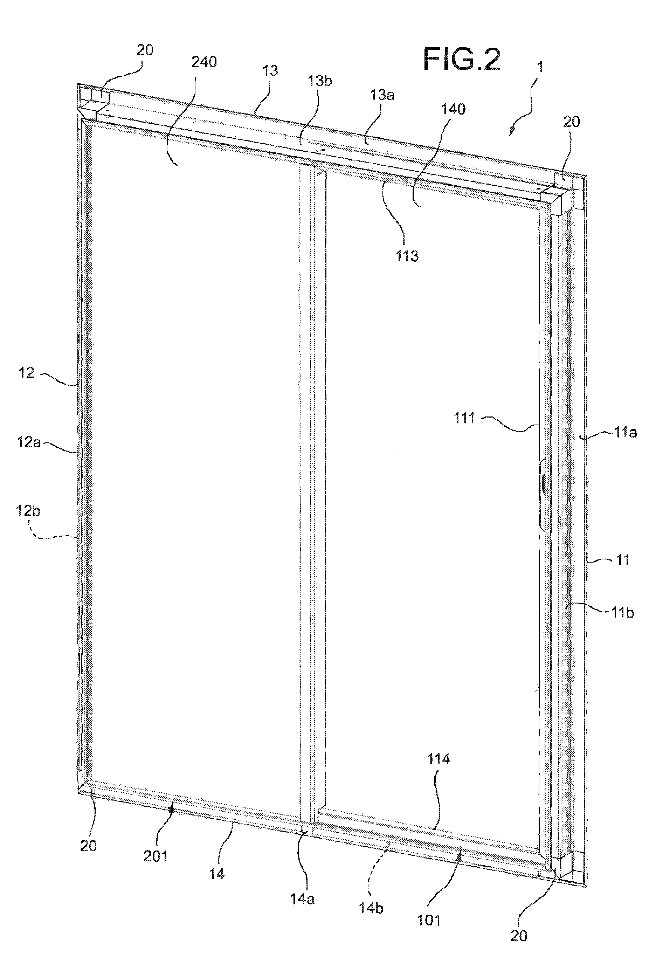

Referring to Figures 1 and 2, these show an example of a door or window having the general reference number 1, which is produced in the form of a glazed door having a sliding wing and a fixed wing and is suitable for installing in a wall of a room on board a boat.

The door or window 1 comprises a principal frame 10 suitable for installation in the abovementioned wall (not shown) in such a way as to surround an opening formed in this wall. The principal frame 10 comprises two vertical members or uprights 11, 12 and two horizontal members or traverses 13, 14, which connect together opposite ends of these uprights 11, 12.

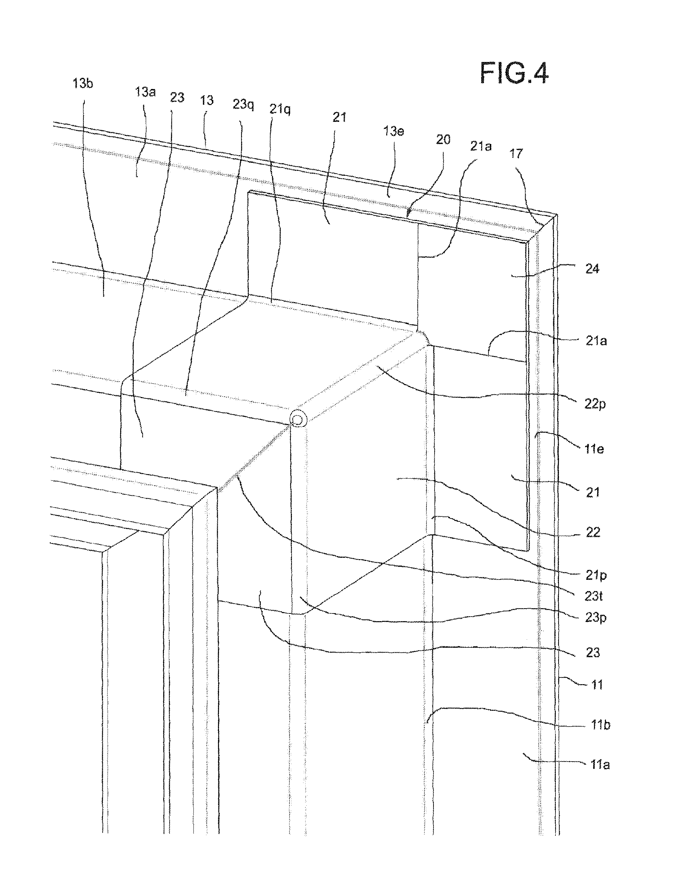

The uprights 11 and 12 and the traverses 13 and 14 are made up of sections of, for example, a metal such as steel, aluminium or metal alloy, or a composite material, and they are of predetermined cross section shape. In particular, the sections used for the uprights 11, 12 and for the traverses 13, 14 each have a respective flange 11a, 12a, 13a and 14a projecting from the rest of the body of the section in such a way as to define with the latter a respective angular surface 11b, 12b, 13b and 14b (visible in Figs 2 and 4). In the assembled condition of the door or window 1, the flanges 11a, 12a, 13a and 14a are located around the outer perimeter of the principal frame 10. The angular surfaces 11b, 12b, 13b and 14b which these define are intended to be coupled to the edges of the opening in which the door or window 1 is installed.

Each of the sections of the uprights 11, 12 and traverses 13, 14 is cut at opposite ends 11e, 12e, 13e and 14e at an angle of 45° with respect to the longitudinal direction of the section. The ends 11e, 12e of each upright 11, 12 are then coupled to the ends 13e, 14e of the traverses 13, 14 to define 45° join planes 17, in such a way as to form corner parts of the principal frame 10.

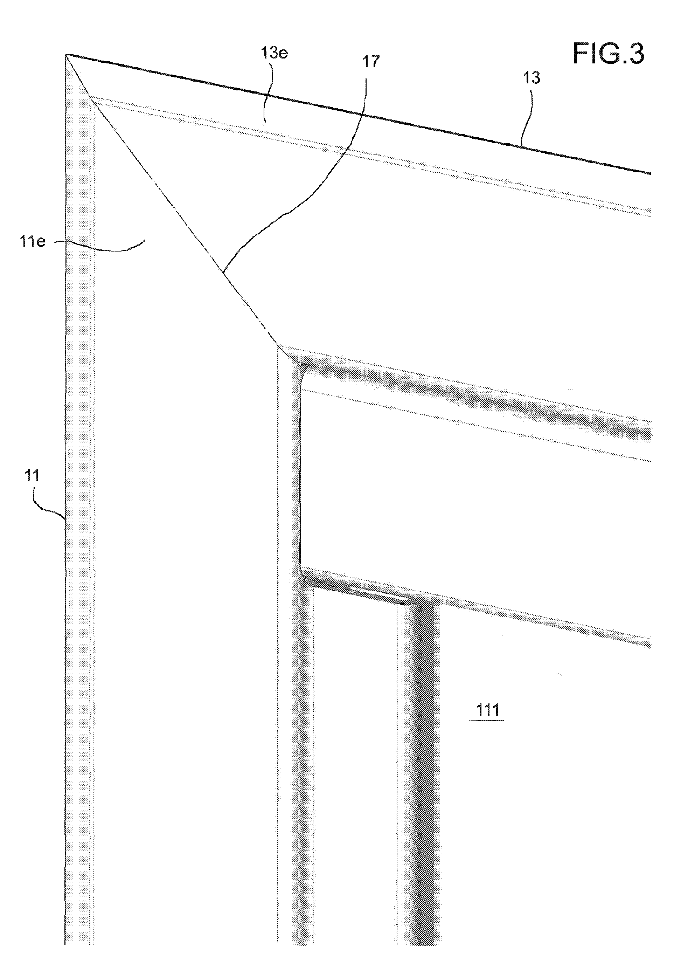

One of these corner parts is illustrated in more detail in Figures 3 and 4, in a front view and rear view, respectively. In particular, Figure 3 shows one of the 45° join planes 17, while Figure 4 shows a connecting member 20 located so as to intersect this join plane 17. This connecting member 20 is made either from a metal sheet (e.g. by cutting, bending or stamping) or from a composite material.

The connecting member 20 has a basically stepped cross section if viewed in the longitudinal direction of one of the sections 11 and 13 connected by it, and comprises a flat base portion 21 divided into two parts, an intermediate portion 22 essentially perpendicular to the base portion 21, and a top portion 23 essentially parallel to the base portion 21. The intermediate portion 22 is connected on one side to the base portion 21 by bend lines 21p and 21q, and on the other side to the top portion 23 by bend lines 23p and 23q. The intermediate portion 22 is also bent into an L along a central bend line 22p, while the top portion 23 is cut into two parts by a cut line 23t which extends from one end of the bend line 22p of the intermediate portion 22. Extending from the other end of this bend line 22p are the internal edges 21a of the two parts of the base portion 21. In this way the connecting member 20 is shaped in such a way as to match the form of the rear side of the corner part of the principal frame 10. In the assembled condition of the principal frame 10, this connecting member 20 is bonded by means of a structural adhesive to the surfaces of this rear side of the corner part of the principal frame 10. In other words, the connecting member 20 is bonded to the surfaces of the rear side of end 11e of upright 11 and of end 13e of traverse 13, making a connection between the upright 11 and the traverse 13 across the join plane 17. The ends 11e, 13e of the upright 11 and of the traverse 13, respectively, therefore define join zones between the members of the principal frame.

An auxiliary connecting member 24 is also bonded to the rear surface of end 11e of upright 11 and that of end 13e of traverse 13, between the internal edges 21a of the two parts of the base portion 21 of the connecting member 20.

The door or window 1 also includes at least one moveable wing 101, which in the example illustrated is of the sort that slides relative to the principal frame 10. The moveable wing 101 comprises a secondary frame 110 designed to be slidably fitted into the principal frame 10. The secondary frame 110 similarly comprises a pair of vertical members or uprights 111, 112 and a pair of horizontal members or traverses 113, 114 connecting together the opposite ends of these uprights 111, 112.

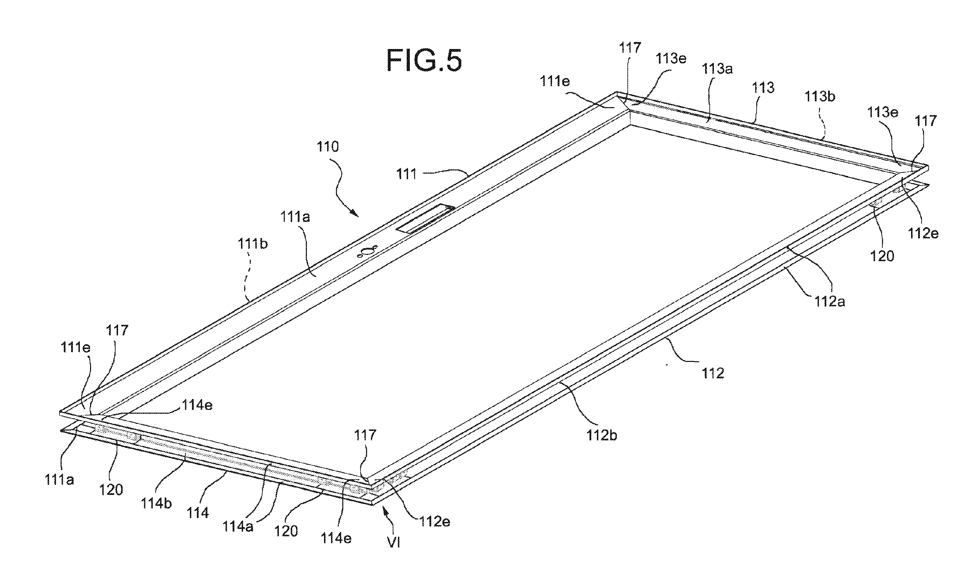

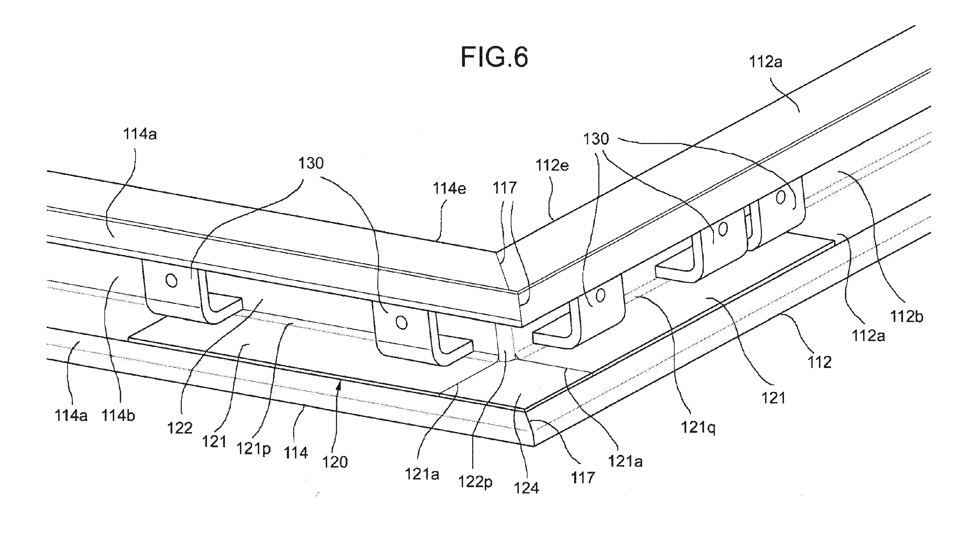

The uprights 111 and 112 and the traverses 113 and 114 are formed from sections of, for example, a metal such as steel, aluminium or metal alloy, or a composite material, and they are of predetermined cross section shape. In particular, the sections used for the uprights 111, 112 and for the traverses 113, 114 each have two flanges 111a, 112a, 113a and 114a projecting from the rest of the body of the section in such a way as to define with the latter a respective U-shaped surface 111b, 112b, 113b and 114b (visible in Figs 5 and 6). In the assembled condition of the wing 101, the flanges 111a, 112a, 113a and 114a are located around the outer perimeter of this wing 101. The U-shaped surfaces 111b, 112b of the uprights 111, 112 are intended to be coupled to closure members 115, one of which is shown in Figure 1. These closure members 115 are realized depending on the structural member of the frame of the wing to which they are fitted. On the U-shaped surfaces 113b, 114b of the traverses 113, 114 on the other hand are sliding systems (not shown) which work on tracks on the principal frame 10. The closure member mounted on the upright 112 shown on the right (in the front view, Fig. 1) of the wing 101 is essentially there as a finish piece, and the closure member mounted on the upright 111 shown on the left (in the front view, Fig. 1) of the wing 101 is designed to adapt itself to a lock 116 mounted on this left-hand upright 111.

As can be seen in Fig. 5, each of the sections of the uprights 111, 112 and traverses 113, 114 is cut at opposite ends 111e, 112e, 113e and 114e at an angle of 45° with respect to the longitudinal direction of the section. The ends 111e, 112e of each upright 111, 112 are then connected to the ends 113e, 114e of the traverses 113, 114 to define respective 45° join planes 117, in such a way as to form corner parts of the secondary frame 110.

One of these corner parts is shown in more detail in Figure 6. In particular, Figure 6 shows one of the 45° join planes 117 and, located so as to intersect this join plane 117, a connecting member 120. This connecting member 120 is made either from metal sheet (e.g. by cutting, bending or by stamping), or made of a composite material.

The connecting member 120 is basically an L in cross section if viewed in the longitudinal direction of one of the sections 112 and 114 which it connects together, and comprises a first flat flange portion 121 divided into two parts, and a second flange portion 122 essentially perpendicular to the first flange portion 121. The second flange portion 122 is connected to the first flange portion 121 by bend lines 121p and 121q. The second flange portion 122 is also bent into an L along a central bend line 122p, while from one end of the bend line 122p of the second flange portion 122 there extend the internal edges 121a of the two parts of the flange portion 121. In this way the connecting member 120 is shaped in such a way as to match the form of at least part of the outer side of the corner part of the secondary frame 110. In the assembled condition of the secondary frame 110, this connecting member 120 is bonded by means of a structural adhesive to surfaces on this outer side of the corner part of the secondary frame 110. In other words, the connecting member 120 is bonded to the U-shaped surface 112b at end 122e of the upright 112 and to the U-shaped surface 114b at end 114e of the traverse 114, making a connection between the upright 112 and the traverse 114 across the join plane 117. The ends 112e, 114e of the upright 112 and of the traverse 114, respectively, therefore define join zones between the members of the secondary frame.

An auxiliary connecting member 124 is bonded to the surface of one of the flanges 112a at end 112e of the upright 112 and to the surface of one of the flanges 114a at end 114e of the traverse 114, between the internal edges 121a of the two parts of the flange portion 121 of the connecting member 120.

The connecting member 120 is provided with shaped parts 130 designed to allow the attachment, for example by screws, of the closure members 115. On the other hand, the inner perimeter of the secondary frame 110 of the moving wing 101 is designed for the attachment, for example by adhesive bonding, of a sheet 140 of transparent or translucent material such as glass.

The door or window 1 also includes a fixed wing 201. The fixed wing 201 comprises a secondary frame 210 designed to be mounted in a stationary manner in the principal frame 10. The structure of the secondary frame 210 of the fixed panel 201 is much the same as that of the secondary frame 110 of the moving wing 101, and will not therefore be further described. The inner perimeter of the secondary frame 210 of the fixed wing 201 is designed for the attachment, for example by adhesive bonding, of a sheet 240 of transparent or translucent material such as glass.

As described above, the structural members that form the principal frame and the secondary frames are joined together by bonding them with a structural adhesive. Eliminating the welds avoids the need to grind off the visible weld beads as was done in the prior art. This makes production times shorter.

Clearly, the present invention is not limited to the type of door or window illustrated, but rather is applicable to any type of door or window comprising at least one frame made of a plurality of frame members made of sections.

## Claims

1. Method of fabricating a door or window frame (10; 110; 210) for a boat, which method is **characterized in that** it comprises the following steps:
- providing a plurality of sections designed to form respective frame members (11, 12, 13, 14; 111, 112, 113, 114); and
- connecting the said sections together by bonding them with a structural adhesive at join zones (11e, 12e, 13e, 14e; 111e, 112e, 113e, 114e) between the said sections.

2. Method according to Claim 1, in which the said bonding step involves the application of a connecting member (20, 24; 120, 124) which is bonded simultaneously to two or more of the said frame members at at least one of the said join zones.

3. Method according to either of the preceding claims, in which the said sections are metal sections.

4. Method according to Claim 3, in which the said metal sections are made of steel.

5. Door or window for a boat comprising at least one frame (10; 110; 210) made up of a plurality of frame members (11, 12, 13, 14; 111, 112, 113, 114), the said frame members consisting of sections, which door or window is **characterized in that** the said frame members are connected together by bonding them with a structural adhesive at join zones (11e, 12e, 13e, 14e; 111e, 112e, 113e, 114e) between adjacent frame members.

6. Door or window according to Claim 5, in which there is a connecting member (20, 24; 120, 124) at at least one of the said join zones, the said member being bonded to two or more of the said frame members in such a way as to form the said connection by adhesive bonding.

7. Door or window according to Claim 5 or 6, in which the said sections are metal sections.

8. Door or window according to Claim 7, in which the said metal sections are made of steel.
